(19) Europäisches Patentamt
European Patent Office
Office européen des brevets

(11) **EP 2 196 307 A1**

(12) **EUROPEAN PATENT APPLICATION**

(43) Date of publication:
**16.06.2010 Bulletin 2010/24**

(51) Int Cl.:
**B30B 1/26** (2006.01)    **H02K 7/02** (2006.01)
**H02K 7/116** (2006.01)    **H02K 16/00** (2006.01)

(21) Application number: **08253969.3**

(22) Date of filing: **11.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Aida Engineering Ltd.**
**Sagamihara-shi,**
**Kanagawa 229-1181 (JP)**

(72) Inventors:
• **Masaki, Ryoso**
**Narashino-shi**
**Chiba-ken, 275-8611 (JP)**

• **Morinaga, Shigeki**
**Narashino-shi**
**Chiba-ken, 275-8611 (JP)**
• **Nagase, Hiroshi**
**Sagamihara-shi,**
**Kanagawa 229-1181 (JP)**

(74) Representative: **Hackney, Nigel John et al**
**Mewburn Ellis LLP**
**33 Gutter Lane**
**London**
**EC2V 8AS (GB)**

(54) **Press machine, method of driving press machine, and industrial machine**

(57)    In an industrial machine using a flywheel, in order to prevent increase in size of a driving motor, etc. and very freely control velocity of a load, an output shaft of a reduction gear set is connected to a load driving shaft, an input-shaft-sided gear of the reduction gear set is driven by a first motor, a differential mechanism is connected to the flywheel, the differential mechanism is configured such that the output shaft of the reduction gear set is connected to a carrier, rotational force inputted from the sun gear is transmitted to the flywheel and stored as energy while the stored energy is discharged to the sun gear and the carrier. Further, the sun gear of the differential mechanism is driven by a second motor, energy is stored by accelerating the flywheel using the second motor according to the rotational angle position of the load driving shaft, and then the load driving shaft is driven while compensating insufficient torque of the first motor by discharging the stored energy.

FIG.1

**Description**

BACKGROUND OF THE INVENTION

Technical Field of the Invention

The present invention relates to an industrial machine, such as a press machine, particularly a configuration for transmitting energy of a flywheel to a load part for driving.

Description of the Related Art

A press machine can be exemplified as an industrial machine requiring large amount of driving torque in a short time. In press machines, it has been considered to control velocity of a slider that performs a press process in order to freely perform press.

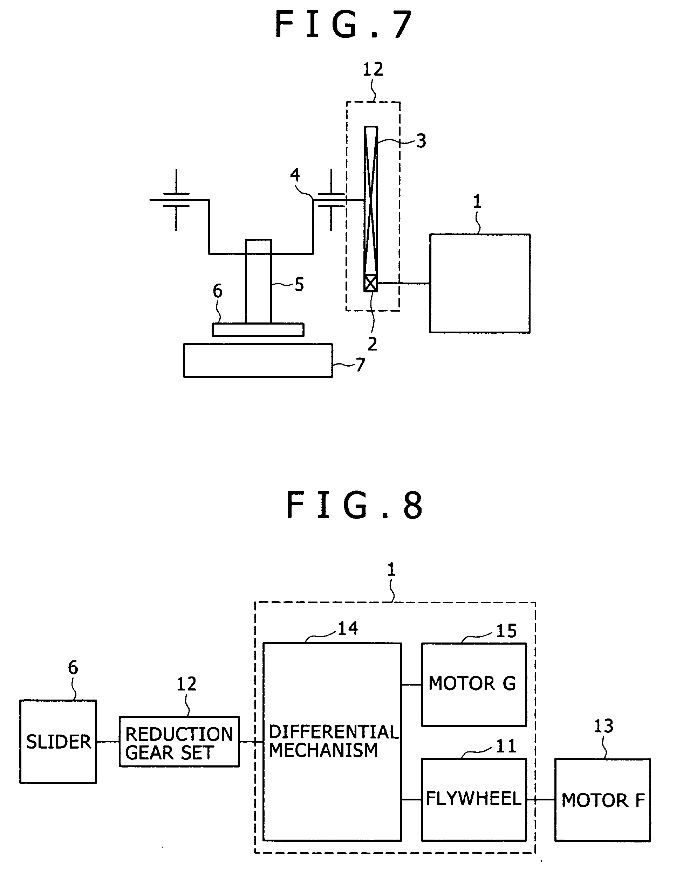

FIG. 7 schematically shows a press machine of a crank press type. In FIG. 7, a main gear 3 is engaged with a gear 2 fitted on a shaft of a driving mechanism 1 and a crank mechanism (crankshaft 4 and con rod 5) is connected to the main gear 3. A slider 6 is reciprocated up/down about a bolster 7 at a stop side by the crank mechanism. The gear 2 and the main gear 3 form a reduction gear set 12. By freely changing the velocity of the shaft of the driving mechanism 1 or changing the velocity normally or inversely, the velocity of the crankshaft 4 is correspondingly changed and the velocity or direction of the reciprocation up/down of the slider 6 is freely changed. Therefore, it is possible to achieve free motion of the slider.

Further, technologies have been disclosed in Patent Documents, such as, JP-A-H6(1994)-190598, JP-A-H11 (1999)-33797, or JP-A-2004-344946.

Technologies illustrated in FIG. 8 are disclosed in JP-A-H6(1994)-190598 and JP-A-H11(1999)-33797. FIG. 8 shows an example of schematic configuration of a press machine, which attaches importance to a driving mechanism 1. In FIG. 8, a slider 6 is driven by rotational force of a flywheel 11 which is transmitted through a differential mechanism 14 and a reduction gear set 12. When rotational velocity of a motor G 15 changes, a velocity ratio of rotational velocity of the flywheel 11 and rotational velocity of an input portion of the reduction gear set 12 can be changed by action of the differential mechanism 14. The differential mechanism 14, the flywheel 11, and the motor G 15 form a driving mechanism corresponding to the driving mechanism 1 shown in FIG. 7. According to this configuration, even though energy is reduced and the velocity of the flywheel 11 is reduced by a pressing operation, the reduction of velocity is compensated by the motor F 13. That is, the rotational velocity of the flywheel 11 and motion velocity of the slider 6 are controlled by controlling the rotational velocity of the motor G 15.

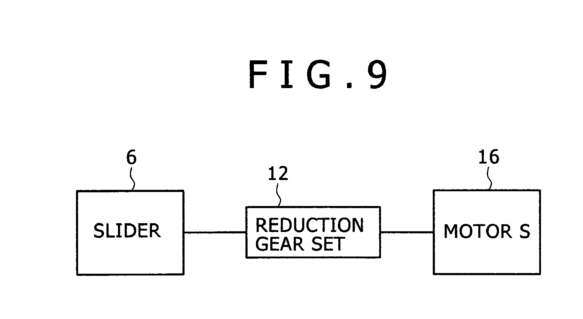

Further, a press machine that drives a slider using only driving force of a motor, as shown in FIG. 9, is disclosed in JP-A-2004-344946. In FIG. 9, a slider 6 is directly driven by a motor S 16 through a reduction gear set 12. The motor S 16 corresponds to the driving mechanism 1 shown in FIG. 7. It is possible to achieve free motion of the slider 6 by controlling the motor S 16.

SUMMARY OF THE INVENTION

According to the technologies disclosed in JP-AH6(1994)-190598 and JP-A-H11(1999)-33797 shown in FIG. 8, since the velocity of the slider is controlled by the motor G 15, the range of velocity control of the slider is limited by the control range of the motor G 15. Further, according to the technology disclosed in JP-A-2004-344946 shown in FIG. 9, although it is possible to freely control the velocity of the slider, the motor S 16 needs large torque, such that a controller, such as a power amplifier, having large capacity, is correspondingly required to control the motor. As a result, the sizes of the motor S 16 and controller increase and the space for them correspondingly increases, such that cost would be increased.

A preferred aim of the present invention is to provide an industrial machine, such as a press machine, in consideration of the problems in the related art, which prevents the increase in capacity or size of a driving motor or a controller of the driving motor while freely controlling the velocity of a driving load, such as a slider.

In order to overcome the problems, it is an aim of the invention to provide a small-sized industrial machine having high performance.

The present invention is a technology that is preferably capable of removing the problems and achieving the aim.

That is, the present invention preferably provides an industrial machine, such as a press machine that rotates a load driving shaft using energy stored in a flywheel, in which an output shaft of a reduction gear set is connected to the load driving shaft, an input-shaft-sided gear of the reduction gear set is driven by a first motor, a differential mechanism is connected to the flywheel, the differential mechanism is configured such that a planetary gear is connected to a carrier, the output shaft of the reduction gear set is connected to the carrier, such that rotational force inputted from a sun gear is transmitted to the flywheel and stored as energy while the stored energy is supplied to the sun gear and the carrier through the planetary gear. Further, the sun gear of the differential mechanism is driven by a second motor and the operational condition of the first and second motors is controlled by a motor control/drive circuit on the basis of information about rotational angle of the load driving shaft. Therefore, energy is stored in the flywheel by increasing rotation of the second motor according to the rotational angle position of the load drive shaft, the stored energy is outputted to the second motor and the load driving shaft, and the load driving shaft is driven by the total torque of the torque by the first motor and the torque by the energy stored in the flywheel while energy is regenerated from the second motor.

Further, the input-shaft-sided gear of the reduction gear set of which the output shaft is connected to the load driving shaft is disposed above a rotary body that is connected to first and second differential mechanisms, a planetary gear of each of the first and second differential mechanism is connected to the flywheel, and sun gears are driven by separate motors, respectively.

BRIEF DESCRIPTION OF THE DRAWINGS

FIG. 1 is a diagram illustrating the configuration of a press machine according to a first embodiment of the present invention;
FIG. 2 is a diagram illustrating the configuration of a power amplifier of the press machine shown in FIG. 1;
FIG. 3 is a diagram illustrating a controller of the power amplifier shown in FIG. 2;
FIG. 4 is a diagram illustrating a press machine according to a second embodiment of the present invention;
FIG. 5 is a diagram illustrating a press machine according to a third embodiment of the present invention;
FIG. 6 is a diagram illustrating an injection molding machine according to a fourth embodiment of the present invention;
FIG. 7 is a diagram illustrating the related art of the present invention;
FIG. 8 is a diagram illustrating the related art of the present invention; and
FIG. 9 is a diagram illustrating the related art of the present invention.

DETAILED DESCRIPTION OF THE PREFERRED EMBODIMENTS

Embodiments are described hereafter with reference to the accompanying drawings.

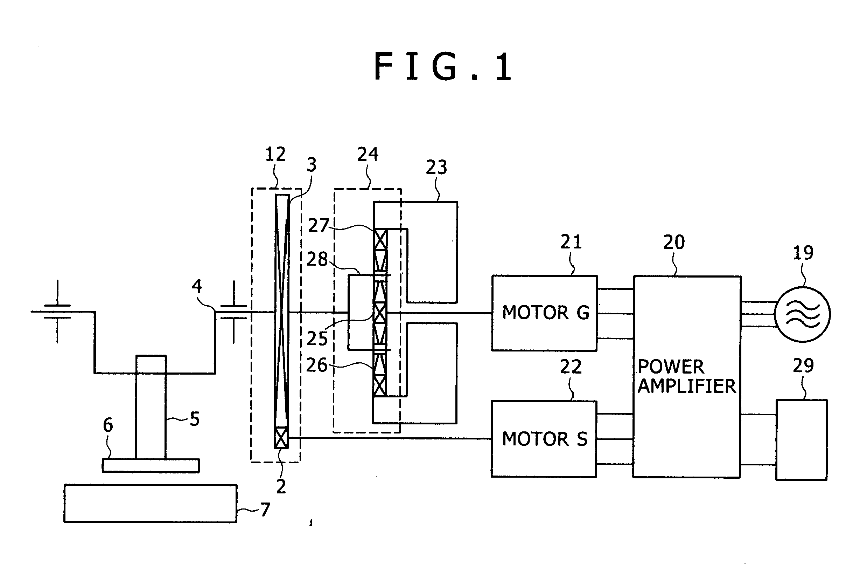

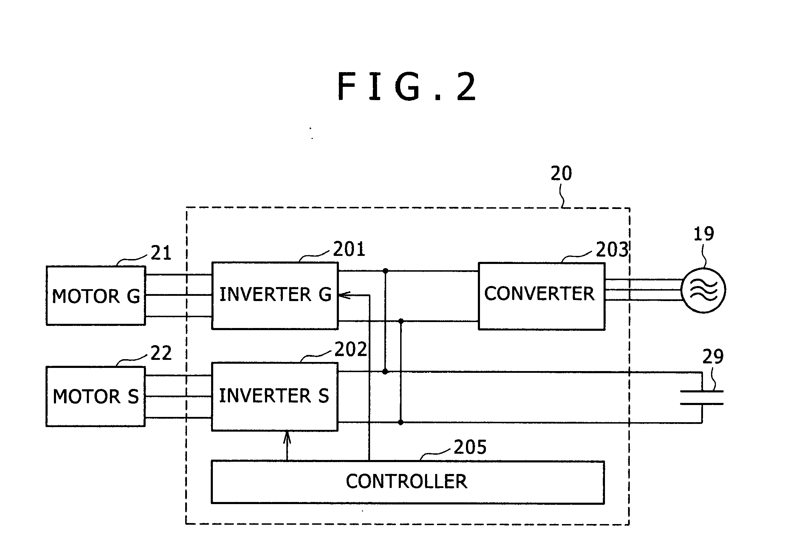

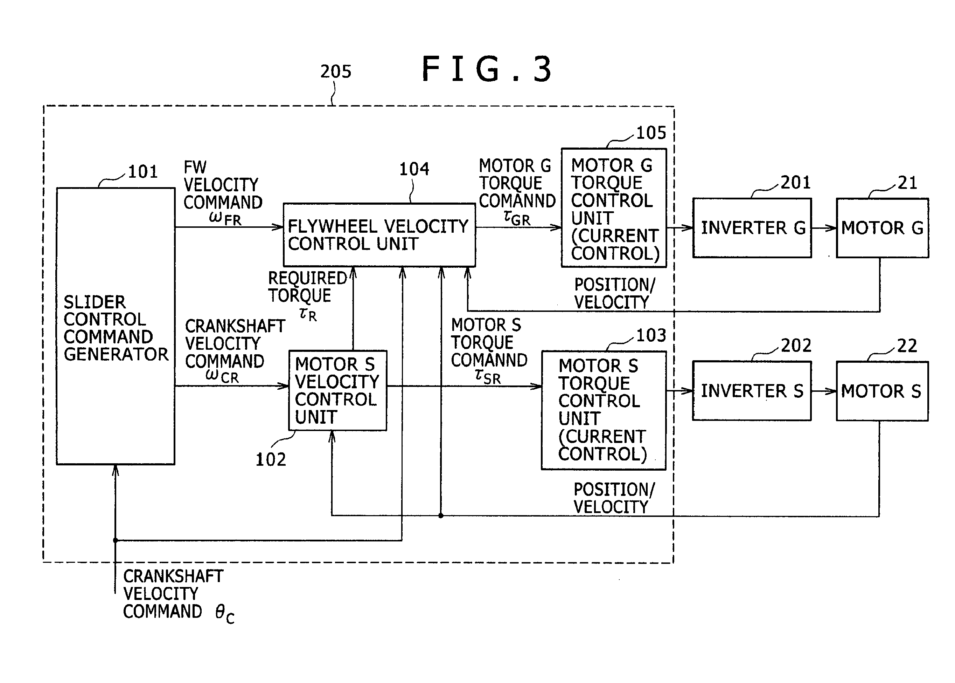

FIGS. 1 to 3 illustrate a first embodiment. FIG. 1 is a diagram illustrating the configuration of a press machine according to the first embodiment, FIG. 2 is a diagram illustrating the configuration of a power amplifier of the press machine shown in FIG. 1, and FIG. 3 is a diagram illustrating a controller 205 of the power amplifier shown in FIG. 2.
Referring to FIG. 1, the press machine 1 includes one differential mechanism 24 and two motors that are a motor S 22 which is a first motor and a motor G 21 which is a second motor. The motor S 22 drives a slider 6 through a reduction gear set 12. In the reduction gear set 12, a main gear 3 that is an output-shaft-sided gear is engaged with a gear 2 that is an input-shaft-sided gear connected to an output shaft of the motor S 22, and a crankshaft 4 is connected to the output shaft. The slider 6 is reciprocated up/down with respect to a bolster 7 at a stop side, by a crank mechanism composed of the crankshaft 4 and a con rod 5. An output shaft of the reduction gear set 12, which is a rotational shaft of the main gear 3, is connected to the differential mechanism 24 such that energy of a flywheel 23 is used for operation of the press. The differential mechanism 24 includes a sun gear 25, a planetary gear 26, a ring gear 27, and a carrier 28, in which the motor G 21, the flywheel 23, and the crankshaft 4 are connected to the sun gear 25, the ring gear 27, and the carrier 28, respectively. Further, a commercial power source 19, the motor G 21, the motor S 22, and an electric storage device 29 are electrically connected to a power amplifier 20, which is a motor control/drive circuit. As the motor G 21 and the motor S 22 are driven by the power amplifier 20, the operation of the slider 6 and velocity $\omega_F$ of the flywheel 23 are simultaneously controlled. A condenser is used as the electric storage device 29.
FIG. 2 is a diagram illustrating the configuration of the power amplifier 20 of the press machine shown in FIG. 1.
Referring to FIG. 2, power from the commercial power source 19 is converted into DC power by a converter 203 and then inputted to an inverter G 201 and an inverter S 202. The inverter G 201 drives the motor G 21 and the inverter S 202 drives the motor S 22. A controller 205, which is a control circuit, performs calculation for controlling the inverter G 201 and the inverter S 202, and outputs control signals to the inverter G 201 and the inverter S 202. Further, the electric storage device 29 that is capable of storing large amount of energy is connected to a DC line, which is an output of the converter 203.
FIG. 3 is a diagram illustrating the configuration of a control system in the controller 205.
Referring to FIG. 3, a rotational angle $\theta_C$ of the crankshaft 4 is inputted at a slider control command generator 101, and a velocity command $\omega_{CR}$ of the crankshaft 4 and a velocity command $\omega_{FR}$ of the flywheel 23 are required for the rotational angle $\theta_C$. Position or velocity of the slider 6 is selectively determined according to the object or condition of the press process, which sets the velocity command $\omega_{CR}$ of the crankshaft 4. An example is described hereafter, but a driving method is not limited thereto. Any one or more of a section where the slider 6 is accelerated, a high-velocity operation section, and a deceleration section, and a press section are freely selected, and press process is performed. The velocity command $\omega_{CR}$ of the crankshaft 4 is set according to the rotational angle $\theta_C$ of the crankshaft 4 such that the crankshaft 4 rotates at a low velocity in press process and at a high velocity other than the press process. The velocity command $\omega_{FR}$ of the flywheel 23 is used for supplying a portion of the energy that is expended in the press process from the flywheel 23. Therefore, the velocity command $\omega_{FR}$ of the flywheel 23 is set to rotate the flywheel 23 at a high velocity when motor torque is not needed, other than the press process and acceleration of the crankshaft 4. Further, in the press process, the rotational direction of the flywheel 23 should be determined such that the flywheel 23 applies torque to the crankshaft 4 while decelerating.

In a motor S velocity control unit 102, the velocity command $\omega_{CR}$ of the crankshaft 4 is inputted, control calculation is performed by feed-backing information about velocity and location of the motor S 22, and a motor S torque command $\tau_{SR}$ is outputted to a motor S torque control unit 103. In the motor S torque control unit 103, the inverter S 202 is controlled for a motor S torque command $\tau_{SR}$, and the velocity $\omega_S$ of the motor S 22, that is, the velocity $\omega_C$ of the crankshaft 4 is controlled. Accordingly, the velocity of the slider 6 which is determined by the rotational angle $\theta_C$ of the crankshaft 4 is controlled. Further, instead of controlling the velocity $\omega_S$ of the motor S 22, current of the motor S 22 may be controlled.

In the press process, necessary torque may not be sufficiently provided only by the torque $\tau_S$ of the motor S 22. Therefore, required torque $\tau_R$, which is the insufficient torque, is outputted from the motor velocity control unit 102 to a flywheel velocity control unit 104.

In the flywheel velocity control unit 104, a motor G torque command $\tau_{GR}$ is preferentially made by the required torque $\tau_R$. However, when there is no required torque $\tau_R$, in the flywheel velocity control unit 104, the flywheel velocity command $\omega_{FR}$ is generated and the following control is performed.

That is, information about the velocity $\omega_G$ of the motor G 21 and velocity $\omega_S$ of the motor S 22 is inputted and the velocity $\omega_F$ of the flywheel 23 is calculated by the following equation,

$$\omega_F = (k_G\omega_G - k_S\omega_S)/k_F \qquad (Eq. 1)$$

where $k_G$ and $k_F$ are a gear ratio of the differential mechanism 24, and $k_S$ is a gear ratio of the reduction gear set 12. Further, Eq. 1 is obtained by the following.

That is, in the differential mechanism 24, the following equation is satisfied for the velocity $\omega_C$ of the crankshaft 4.

$$\omega_C = k_G\omega_G - k_F\omega_F \qquad (Eq. 2)$$

Further, relationship between the velocity $\omega_S$ of the motor S 22 and the velocity $\omega_C$ of the crankshaft 4 is obtained by the following equation.

$$\omega_C = k_S\omega_S \qquad (Eq. 3)$$

Therefore, the velocity of $\omega_F$ of the flywheel 23 is obtained from Eq. 1, by satisfying Eq. 2 and Eq. 3.

Next, the difference between the flywheel velocity command $\omega_{FR}$ and the calculated velocity $\omega_F$ of the flywheel 23 is calculated, and the motor G torque command $\tau_{GR}$ is calculated by feed-back control on the basis of the calculated result. Further, the required torque $\tau_R$, which is the motor G torque command $\tau_{GR}$ as described above, is preferentially made, but it may be determined by the rotational angle $\theta_C$ of the crankshaft 4 whether to use the motor G torque command $\tau_{GR}$ that can be obtained by the feed-back control or the required torque $\tau_R$. The motor G torque command $\tau_{GR}$ obtained as described above is outputted to the motor G torque control unit 105. In the motor G torque control unit 105, torque control calculation of the motor G 21 is performed, and the inverter G 201 is controlled by outputting a signal based on the calculated result to the inverter G 201.

Next, the operation of the press machine shown in FIG. 1 is described. The operation of the press machine is largely divided into an acceleration section, a high-velocity section, a deceleration section, and a press section, on the basis of the rotational angle $\theta_C$ of the slider 6.

The acceleration section is a section where the slider 6 starts to be lifted from a bottom dead center. In the acceleration section, the velocity $\omega_C$ of the crankshaft 4 is increased. Therefore, mainly the motor S 22 applies acceleration torque to the crankshaft 4.

The high-velocity section is a section where the slider is positioned near a top dead center. The crankshaft 4 rotates at a high velocity in the high-velocity section. Because acceleration torque is not needed in the high-velocity section, torque of the crankshaft 4 is small. The velocity of the crankshaft is controlled by the motor S 22 while the motor G 21 is controlled to store energy to the flywheel 23 and the velocity $\omega_F$ of the flywheel 23 is increased. Further, in the acceleration section, control for accelerating the motor S 22 and gradually increasing the velocity $\omega_F$ of the flywheel 23 may also be performed when the electric capacity of the commercial power source 19 is sufficient.

The deceleration section is a section where the crankshaft 4 is positioned near the bottom dead center across the top dead center. In the deceleration section, energy is further stored to the flywheel 23 by regeneration of the motor S 22.

The press section is a section where the slider 6 is positioned closer to the bottom dead center and the press process is performed at a low velocity. Therefore, the crankshaft 4 needs large torque, such that the motor S 22 is driven while the motor G 21 is decelerated. As the motor G 21 is decelerated, energy is supplied from the flywheel 23 to the motor G 21 by the principle of the differential mechanism 24, which is described below, while the energy of the flywheel 23 is also supplied to the carrier 28. Accordingly, the torque $\tau S$ of the motor S 22 and the torque generated at the carrier 28 are increased in the crankshaft 4, such that large torque can be generated.

In the press machine show in FIG. 1, it is possible to reduce the normal power of two motors as compared with press machines in the related art, to perform the press process, using the above configuration.

The operational principle of the press machine of FIG. 1 is described hereafter.

Assuming that torque of the motor G 21, the motor S 22, the flywheel 23, the carrier 28, and the crankshaft 4 is $\tau_G$, $\tau_S$, $\tau_F$, $\tau_{CA}$, and $\tau_C$, respectively, and there is no loss in the differential mechanism 24, the following equations are obtained.

$$\tau_{CA} = \tau_G / k_G = \tau_F / k_F \qquad (Eq. \ 4)$$

$$\tau_C = \tau_{CA} + \tau_S / k_S \qquad (Eq. \ 5)$$

Power $P_G$ inputted from the motor G 21 to the differential mechanism 24, power $P_F$ outputted from the differential mechanism 24 to the flywheel 23, and power $P_{CA}$ outputted from the carrier 28 to the crankshaft 4 are respectively $P_G = \tau_G\omega_G$, $P_F = \tau_F\omega_F$, and $P_{CA} = \tau_{CA}\omega_C$, and

$$P_{CA} = P_G - P_F \qquad (Eq. \ 6)$$

by Eq. 2 and Eq. 4.

At the start of the press section, the flywheel 23 rotates at a high velocity in the negative direction at a high velocity $\omega_F$. The velocity $\omega_C$ of the crankshaft 4 is decreased to a predetermined small positive value. Therefore, the velocity $\omega_G$ of the motor G 21 is a negative value by Eq. 2. In this condition, when the torque $\tau_G$ of the motor G 21 is positive, from Eq. 4, the $\tau_{CA}$ and $\tau_F$ become positive, and the power $P_F$, $P_G$ become negative. Further, the power $P_{CA}$ becomes positive. As can be clearly seen from Eq. 5, the positive value of the $\tau_{CA}$ means the torque $\tau_C$ of the crankshaft 4 is larger than the torque $\tau_C/k_S$ by the motor S 22, such that pressing force by the slider 6 is large. Further, the negative values of the Power $P_F$, $P_G$ means that power is outputted from the flywheel 23 to the differential mechanism 24 and the power is transmitted from the differential mechanism 24 to the motor G 21. Further, since the power $P_{CA}$ is positive, power is outputted from the carrier 28 to the crankshaft 4. That is, a portion of the energy of the flywheel 23 is regenerated by the motor G 21 and is converted into electric energy, the crankshaft 4 is driven by the motor S 22 through the reduction gear set 12. Further, the crankshaft 4 is directly driven by the carrier 28.

Therefore, the energy stored to the flywheel 23 from the acceleration section to the deceleration section can be used for the press process in the press section, such that it is possible to reduce the power capacity of the commercial power source 19, which is determined by a desired momentary power. In particular, when the capacity of the electric storage device 29 is large, the power from the commercial power source can be equalized, and it is possible to provide a press machine that can be used at a small factory, to reduce the maximum power of a desired commercial power source. Because the force for driving the slider 6 is determined by the amount of change of the driving torque of the motor S 22 and the energy of the flywheel 23, which is controlled by the motor G 21, that is, input/output power of the flywheel 23, power for the two motors is decreased. Accordingly, it is possible to reduce the rating capacity of the two motors and the power amplifier 20. Further, it is possible to reduce the capacity of the electric storage device 29 that stores electric energy, by collaboratively controlling the two motors, and reduce the size of the electric storage device 29, in addition to the motor and power amplifier 20. Further, because the amount of needed energy depends on the type of press process, energy that is stored in the flywheel 23 or the electric storage device 29 may reach a rating value or a predetermined level between the acceleration section and the deceleration section. In this case, energy is not stored from the above section to the press section and only sliding is performed with the stored energy kept.

According to the first embodiment, by collaboratively controlling plural motors, it is possible to drive the slider 6 to have high performance and various functions, using the power from the commercial power source and the energy stored in the flywheel 23, and achieve a small-sized press machine having high performance.

Further, in the embodiment shown in FIG. 1, even though the differential mechanism 24 is connected to the rotational shaft of the main gear 3 of the reduction gear set 12, it may be connected to a rotational shaft of the gear 2.

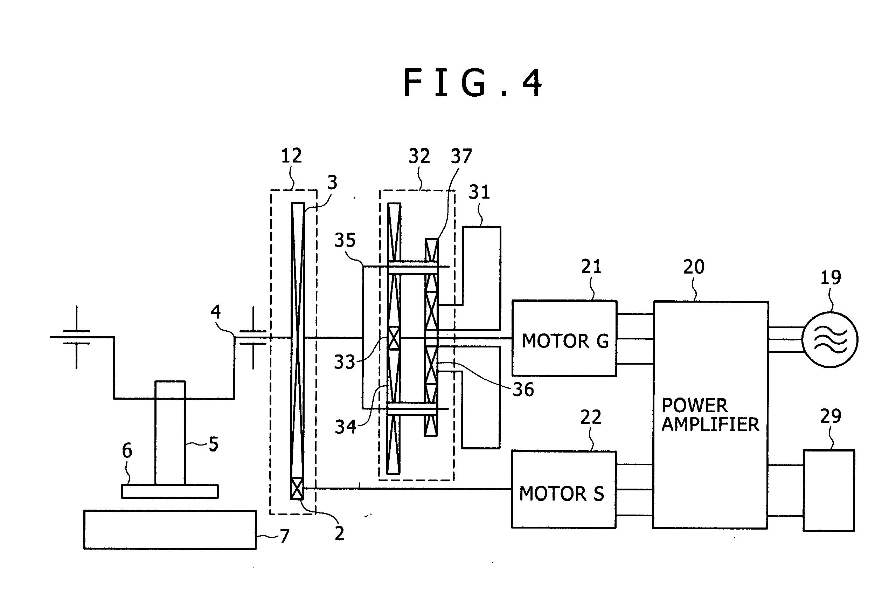

FIG. 4 is a diagram illustrating a press machine according to a second embodiment. The press machine according to the second embodiment is different from the first embodiment, in the configuration of the differential mechanism. That is, in the press machine according to the first embodiment shown in FIG. 1, the differential mechanism 24 includes the sun gear, the planetary gear, the ring gear, and the carrier, whereas in the press machine according to the second embodiment of FIG. 4, a differential mechanism 32 includes sun gears 33, 36, planetary gears 34, 37, and a carrier 35. That is, the differential mechanism 32 does not include a ring gear. In the differential mechanism 32, the planetary gears 34, 37 are integrally formed, the operation is determined by the common carrier 35 and the two sun gears 33, 36. The configuration of the second motor, that is, the motor G 21 connected to the sun gear 33 is the same as the first embodiment shown in FIG. 1, but it is different from the first embodiment in that a flywheel 31 is connected to the sun gear 36. The motor S 22 that is the first motor, the power amplifier 20 that is the motor control/drive circuit, and the electric storage device 29 are the same as in the first embodiment. In FIG. 4, the relationship among the velocities of the crankshaft 4 connected to the differential mechanism 32, the motor G 21, and the flywheel 31 is expressed as Eq. 2, as in the first embodiment, and the operational principle is the same as the first embodiment. The method of controlling the press machine and the energy flow are also the same as the first embodiment.

In general, in the differential mechanism, the sun gear has a smaller diameter than the ring gear, such that the number of teeth is small and the number of revolutions is large. Therefore, as shown in FIG. 4, when the flywheel 31 is connected to the sun gear 36, not the ring gear, the number of revolutions of the flywheel 31 is large, and as a result, when the same amount of energy is stored, it is possible to reduce the size of the flywheel 31. The gear ratio of the differential mechanism 32 can be set to a desired value, such that it is possible to reduce the size of the differential mechanism 32, the flywheel 31, and the motor G 21. Further, although the gear ratio of the sun gear 33 and the planetary gear 34 is different from the gear ratio of the sun gear 36 and the planetary gear 37 in FIG. 4, they may be the same.

According to the second embodiment, by collaboratively controlling plural motors, it is possible to drive the slider to have high performance and various functions, using power from the commercial power source and the energy stored in the flywheel, and achieve a small-sized press machine having high performance.

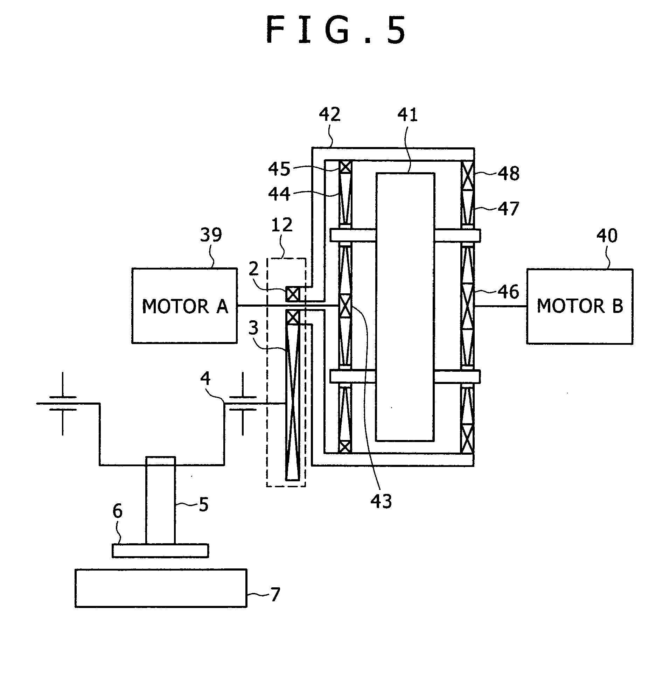

FIG. 5 is a diagram illustrating a press machine according to a third embodiment. In the press machine according to the third embodiment, two differential mechanisms each include a sun gear, a planetary gear, and a ring gear are used.

Connection of a motor A 39 that is a first motor, a motor B 40 that is a second motor, a flywheel 41, and a differential mechanism is described hereafter. One differential mechanism that is a first differential mechanism includes a sun gear 43 connected to the motor A 39, a planetary gear 44, and a ring gear 45, and the other differential mechanism that is a second differential mechanism includes a sun gear 46 connected to the motor B 40, a planetary gear 47, and a ring gear 48. Both of the ring gears 45, 48 are integrally rotated with a rotary body 42. As the ring gears 45, 48 rotate, a slider 6 is reciprocated up/down by a reduction gear set 12. Further, the flywheel 41 is also a carrier of the planetary gears 44, 47. That is, the flywheel 41 functions as a carrier of the differential mechanism, in addition to storing energy.

Assuming that the velocities of the motor A 39, the motor B 40, the flywheel 41, and the rotary body 42 are $\omega_A$, $\omega_B$, $\omega_F$, and $\omega_R$,

$$\omega_F = k_A \omega_A - k_{R1} \omega_R \qquad\qquad (Eq. 7)$$

$$\omega_F = k_B \omega_B - k_{R2} \omega_R \qquad\qquad (Eq. 8)$$

$$\omega_C = k_R\omega_R \qquad\qquad (Eq. 9)$$

where $k_A$, $k_B$, $k_{R1}$, and $k_{R2}$ are constants determined by the gear ratio of the differential mechanism, and $k_R$ is a constant determined by the gear ratio of the reduction gear set 12.

Further, as for the torque, the relationship among torque $\tau_A$ from the motor A 39 to the sun gear 43, torque $\tau_B$ from the motor B 40 to the sun gear 46, torque $\tau_{F1}$ from the planetary gear 44 to the flywheel 41, torque $\tau_{F2}$ from the planetary gear 47 to the flywheel 41, torque $k_{R1}$ driving the ring gear 45, torque $k_{R2}$ driving the ring gear 48, and torque $\tau_C$ of the crankshaft is as follows.

$$\tau_{F1} = \tau_A/k_A = \tau_{R1} / k_{R1} \qquad\qquad (Eq. 10)$$

$$\tau_{F2} = \tau_B/k_B = \tau_{R2} / k_{R2} \qquad\qquad (Eq. 11)$$

$$\tau_C = (\tau_{R1} + \tau_{R2}) / k_R \qquad\qquad (Eq. 12)$$

As can be clearly seen from the above equations, the velocities of the motors A 39 and the motors B 40 are controlled on the basis of information about rotational angle of the crankshaft 4 corresponding to the location of the slider 6 by a control circuit (not shown in the drawings), such that the velocity $\omega_C$ of the crankshaft and the velocity $\omega_F$ of the flywheel can be independently controlled. Further, as in the first embodiment shown in FIG. 1 and the second embodiment shown in FIG. 4, it is possible machining an object by outputting the energy stored in the flywheel 41 in the acceleration section, the high-velocity section, and the deceleration section, to the slider 6 in the press section. That is, according to the location of the slider 6, in the acceleration section, the high-velocity section, and the deceleration section, rotation of the motor A 39 and the motor B 40 increases, the flywheel 41 is accelerated, and energy is stored in the flywheel 41. In the press section, the motor A 39 and the motor B 40 are decelerated, the energy stored in the flywheel 41 is outputted to the motor A 39 and the motor B 40, and the crankshaft 4. Further, the crankshaft 4 is driven by the total torque of the torque by the motor A 39 and the motor B 40 and the torque by the energy stored in the flywheel 41.

In the third embodiment, since the two motors are respectively connected to the sun gears of the separate differential mechanisms, it is possible to reduce the size of the motors and rotate the motors at a high velocity. Further, it is possible to further reduce the size of the motor and the power amplifier by optimizing the gear ratios of the two differential mechanisms.

Further, in the third embodiment, it is also possible to drive the slider to have high performance and various functions, using the power from the commercial power source and the energy stored in the flywheel, by collaboratively driving plural motors, and achieve a small-sized press machine having high performance.

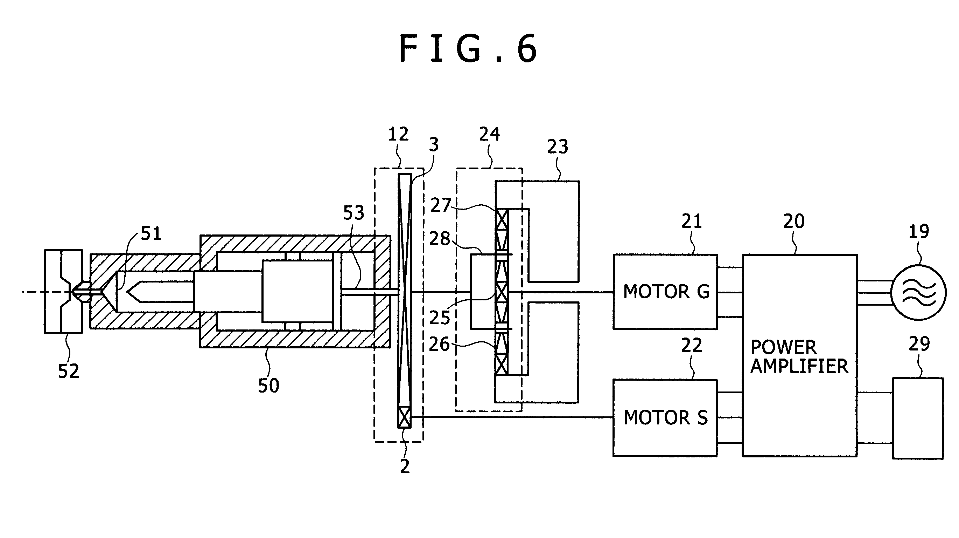

FIG. 6 is a diagram illustrating a fourth embodiment. The fourth embodiment relates to an industrial machine that rotates a load driving shaft using energy stored in a flywheel, in which an injection molding machine is exemplified.

In FIG. 6, the configuration including two motors 21, 22, a reduction gear set 12, a differential mechanism 24, a flywheel 23, a power amplifier 20, and an electric storage device 29 is the same as in the first embodiment shown in FIG. 1. In this configuration, rotation of a motor G 21, which is a second motor, increases according to a rotational angle position of a load driving shaft, that is, an input rotary shaft 53 of an injection molding part 50, such that the flywheel 23 is accelerated and energy is stored in the flywheel 23. Further, the energy stored in the flywheel 23 is outputted to the motor G 21 and the input rotational shaft 53 of the injection molding part 50 by decelerating the motor G 21 and the input rotary shaft 53 is driven by the total torque of the torque by the motor S 22 that is a first motor and the torque by the energy stored in the flywheel 23, while energy is regenerated from the motor G 21 and stored in the electric storage device 29. In the injection molding part 50, the input rotary shaft 53 of the injection molding part 50 needs large torque to inject charged resin 51 into a mold and make a desired shape within a short time. Therefore, the input rotary shaft 53 is driven by the total torque of the torque by the motor S 22 and the torque by the energy stored in the flywheel 23 when the motor G 21 and the motor S 22 are controlled and the resin 51 is injection-molded by the mold 52, and in the other process, the input rotary shaft 53 is rotated at a high velocity to reduce tact time. Accordingly, it is possible to achieve an injection molding machine using a small motor having a small capacity.

According to the fourth embodiment, it is possible to drive the load part, using the power from the commercial power source and the energy stored in the flywheel, by collaboratively driving plural motors having small capacities and provides a small-sized injection molding machine having high performance.

Although press machines and an injection molding machine are described in the above embodiment, the present invention is not limited thereto and may be applied to industrial machines requiring large torque. Further, even though the differential mechanism uses a planetary gear set in the above embodiments, other differential mechanisms may be used. Furthermore, an electric double layer capacitor or a chargeable battery, other than the condenser, may be used as the electric storage device. In addition, although two motors are used in the above embodiments, the present invention is not limited thereto.

The present invention may be modified different from the above embodiments without departing from the spirit and main characteristics. Therefore, the embodiments are nothing but simple embodiments and should not be limitedly construed. The scope of the present invention is described in the claims. Further, it should be understood that modifications and changes within the scope of the present invention are included in the present invention.

**Claims**

1.    A press machine that includes a slider that is driven to reciprocate up/down by first and second motors, the press machine comprising:

    a flywheel that stores energy; and
    a differential mechanism having first, second, and third rotary bodies,

    wherein the first motor and the slider are connected to the first rotary body, the second motor is connected to the second rotary body, and the flywheel is connected to the third rotary body.

2.    A press machine that includes a slider that is driven to reciprocate up/down by first and second motors,
    wherein the first and second motors drive the slider using first and second differential mechanisms, respectively, while the first and second differential mechanisms are connected to a flywheel that stores energy.

3.    A press machine that includes a slider that is driven to reciprocate up/down by a plurality of motors, the press machine comprising:

    a differential mechanism connected to at least one of the motors, the slider, and a flywheel storing energy; and
    a control unit that controls input/output energy of the motors.

4.    A press machine that includes a slider that is driven to reciprocate up/down by a plurality of motors, the press machine comprising:

    a differential mechanism connected to at least one of the motors, the slider, and a flywheel storing energy; and
    an electric storage device storing input/output energy of the motors.

5.    A press machine comprising:

    a plurality of motors;
    a flywheel storing energy;
    a differential mechanism having separate rotary bodies respectively connected with the flywheel and the plurality of motors; and
    a slider reciprocated by rotation of one of the rotary bodies,

    wherein press process is performed by supplying power to at least one of the plurality of motors to drive another motor.

6.    A press machine that performs press process by rotating a crankshaft to reciprocate a slider up/down using energy stored in a flywheel, the press machine comprising:

    a reduction gear set of which an output shaft is connected to a crankshaft;
    a first motor driving an input-shaft-sided gear of the reduction gear set;
    a differential mechanism connected to the flywheel, having a planetary gear engaged with a carrier connected to an output shaft of the reduction gear set, transmitting rotational force inputted from a sun gear and storing the force as energy into the flywheel, and supplying the energy stored in the flywheel to the sun gear and the carrier through the planetary gear;

a second motor driving the sun gear of the differential mechanism; and

a motor control/drive circuit controlling the operating condition of the first and second motors on the basis of information about rotational angle of a crankshaft which corresponds to the location of the slider,

wherein, according to the location of the slider, a first section where energy is stored in the flywheel by increasing rotation of the second motor and accelerating the flywheel, and a second section where the energy stored in the flywheel is outputted to the second motor and the crankshaft by decelerating the second motor, the crankshaft is driven by the total torque of the torque by the first motor and the torque by the energy stored in the flywheel while energy is regenerated from the second motor, are provided.

7. The press machine according to claim 6,
wherein the differential mechanism includes a sun gear on the inner circumference, a ring gear on the outer circumference, a planetary gear between the sun gear and the ring gear, and the flywheel is connected to the ring gear, such that rotational force inputted from the sun gear is transmitted to the flywheel and stored as energy while the energy store in the flywheel is supplied to the sun gear and the carrier through the ring gear and the planetary gear.

8. The press machine according to claim 6 or 7,
wherein the motor control/drive circuit includes a first inverter driving the first motor and a second inverter driving the second motor.

9. The press machine according to claim 6, 7 or 8,
wherein an electric storage device is connected to input lines of the first and second inverters, such that the energy regenerated from the second motor in the second section is stored in the electric storage device.

10. A press machine that performs press process by rotating a crankshaft to reciprocate a slider using energy store in a flywheel, the press machine comprising:

a reduction gear set of which an output shaft is connected to the crankshaft;

a rotary body where an input-shaft-sided gear of the reduction gear set is mounted;

a first differential mechanism having a first ring gear connected to the rotary body and a first planetary gear connected to the flywheel;

a second differential mechanism having a second ring gear connected to the rotary body and a second planetary gear connected to the flywheel;

a first motor driving a first sun gear of the first differential mechanism;

a second motor driving a second sun gear of the second differential mechanism; and

a control circuit controlling the rotational velocities of the first and second motors on the basis of information about rotational angle of the crankshaft which corresponds to the location of the slider,

wherein, according to the location of the slider, a first section where energy is stored in the flywheel by increasing rotation of the first motor or the second motor and accelerating the flywheel, and a section where the energy stored in the flywheel is outputted to the first motor or the second motor and the crankshaft by decelerating the first motor or the second motor and the crankshaft is driven by the total torque of the torque by the first motor or the second motor and the torque by the energy stored in the flywheel.

11. The press machine according to claim 10,
wherein the first differential mechanism includes a first sun gear on the inner circumference, a first ring gear on the outer circumference, a first planetary gear between the first sun gear and the first ring gear, and
the second differential mechanism includes a second sun gear on the inner circumference, a second ring gear on the outer circumference, a second planetary gear between the second sun gear and the second ring gear.

12. An industrial machine that rotates a load driving shaft using energy stored in a flywheel, comprising:

a reduction gear set of which an output shaft is connected to the load driving shaft;

a first motor driving an input-shaft-sided gear of the reduction gear set;

a differential mechanism connected to the flywheel, having a planetary gear engaged with a carrier connected with an output shaft of the reduction gear set, transmitting rotational force inputted from a sun gear and storing the force as energy into the flywheel, and supplying the energy stored in the flywheel to the sun gear and the carrier through the planetary gear;
a second motor driving the sun gear of the differential mechanism; and
a motor control/drive circuit controlling the operating condition of the first and second motors on the basis of information about rotational angle of the load driving shaft,

wherein, according to the rotational angle position of the load driving shaft, a section where energy is stored in the flywheel by increasing rotation of the second motor and accelerating the flywheel, and a section where the energy stored in the flywheel is outputted to the second motor and the load driving shaft by decelerating the second motor, the load driving shaft is driven by the total torque of the torque by the first motor and the torque by the energy stored in the flywheel while energy is regenerated from the second motor, are provided.

13. The industrial machine according to claim 12,
wherein the load driving shaft is an input rotary shaft of an injection molding machine.

14. A method of driving a press machine that performs press process by rotating a crankshaft to reciprocate a slider up/down using energy stored in a flywheel,
wherein the press machine includes:

a reduction gear set of which an output shaft is connected to a crankshaft;
a first motor driving an input-shaft-sided gear of the reduction gear set;
a differential mechanism connected to the flywheel, having a planetary gear engaged with a carrier connected with an output shaft of the reduction gear set; transmitting rotational force inputted from a sun gear and storing the force as energy into the flywheel, and supplying the energy stored in the flywheel to the sun gear and the carrier through the planetary gear;
a second motor driving the sun gear of the differential mechanism; and
a motor control/drive circuit controlling the operating condition of the first and second motors on the basis of information about rotational angle of a crankshaft which corresponds to the location of the slider, and
the method comprises:

requiring a velocity command of the crankshaft and a velocity command of the flywheel on the basis of information about a rotational angle of the crankshaft in the motor control/drive circuit;
calculating and outputting a torque command of the first motor on the basis of the position and the velocity command of the crankshaft in the motor control/drive circuit;
controlling the velocity of the first motor to be the calculated torque command in the motor control/drive circuit;
outputting insufficient torque of the first motor as a required torque in the press process in the motor control/drive circuit;
calculating a torque command of the second motor on the basis of the difference between the velocity command of the flywheel and the velocity of the flywheel in the motor control/drive circuit; and
controlling torque of the second motor on the basis of the torque command of the second motor in the motor control/drive circuit; and
according to rotational angle of the crankshaft, energy is stored in the flywheel by rotation of the second motor, a portion of the stored energy is outputted to the crankshaft, insufficient torque of the first motor is compensated by the energy stored in the fly wheel, and the crankshaft is driven.

FIG.1

# FIG.2

# F I G . 3

21 MOTOR G
201 INVERTER G
105 MOTOR G TORQUE CONTROL UNIT (CURRENT CONTROL)
MOTOR G TORQUE COMANND $\tau_{GR}$
POSITION/VELOCITY

22 MOTOR S
202 INVERTER S
103 MOTOR S TORQUE CONTROL UNIT (CURRENT CONTROL)
MOTOR S TORQUE COMANND $\tau_{SR}$
POSITION/VELOCITY

104 FLYWHEEL VELOCITY CONTROL UNIT
205
FW VELOCITY COMMAND $\omega_{FR}$
REQUIRED TORQUE $\tau_R$
CRANKSHAFT VELOCITY COMMAND $\omega_{CR}$
102 MOTOR S VELOCITY CONTROL UNIT

101 SLIDER CONTROL COMMAND GENERATOR

CRANKSHAFT VELOCITY COMMAND $\theta_C$

13

# F I G . 4

# FIG. 5

# F I G . 6

MOTOR G

MOTOR S

POWER
AMPLIFIER

EP 2 196 307 A1

# FIG.7

# FIG.8

# FIG.9

Europäisches
Patentamt

European
Patent Office

Office européen
des brevets

**EUROPEAN SEARCH REPORT**

Application Number

EP 08 25 3969

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 468 194 A (HAYASHI KEIICHIRO [JP]) 21 November 1995 (1995-11-21) | 1-3,5, 10,11 | INV. B30B1/26 H02K7/02 |
| A | * claims; figures * | 6,10,12, 14 | H02K7/116 H02K16/00 |
| | * column 10, line 22 - column 11, line 52; claim; figure 15 * ----- | | |
| X | EP 1 930 149 A (BURKHARDT GMBH MASCHINENFABRIK [DE]) 11 June 2008 (2008-06-11) | 1,3-9, 12-14 | |
| A | * paragraph [0046] - paragraph [0059]; claims; figures * ----- | 6,12,14 | |
| X | DE 196 40 440 A1 (FRAUNHOFER GES FORSCHUNG [DE]) 9 April 1998 (1998-04-09) | 4,6-9, 12-14 | |
| A | * column 2, line 22 - column 4, line 28; claims; figure 1 * ----- | 6,12,14 | |
| X | EP 1 126 581 A (SCHULER PRESSEN GMBH & CO [DE]) 22 August 2001 (2001-08-22) * paragraph [0016] - paragraph [0018]; claims; figure * ----- | 1 | |
| A | JP 59 070497 A (AIDA ENG LTD) 20 April 1984 (1984-04-20) * abstract; figures * ----- | 1 | TECHNICAL FIELDS SEARCHED (IPC) B30B B29C H02K |
| A | JP 11 058091 A (AIDA ENG LTD) 2 March 1999 (1999-03-02) * abstract; figures * ----- | 1 | |
| A | JP 11 033797 A (AMADA CO LTD) 9 February 1999 (1999-02-09) * abstract; figures * ----- | 1 | |

The present search report has been drawn up for all claims

| Place of search | Date of completion of the search | Examiner |
|---|---|---|
| The Hague | 18 September 2009 | Baradat, Jean-Luc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 08 25 3969

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the
requirements of unity of invention and relates to several inventions or groups of inventions, namely:

```
1. claim: 1

        press machine having a differential mechanism wherein the
        first motor and the slider are connected to the first rotary
        body, the second motor is connected to the second rotary
        body, and the flywheel is connected to the third rotary
        body.
                        ---

2. claim: 2

        press machine with a first and a second differential
        mechanism
                        ---

3. claims: 3-5

        press machine including means for saving energy
                        ---

4. claims: 6-11 14

        press machine including a crankshaft and method for using it
                        ---

5. claim: 12 13

        industrial machine using the energy stored in a flywheel
                        ---
```

**ANNEX TO THE EUROPEAN SEARCH REPORT
ON EUROPEAN PATENT APPLICATION NO.**

EP 08 25 3969

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2009

| Patent document cited in search report | | Publication date | Patent family member(s) | | Publication date |
|---|---|---|---|---|---|
| US 5468194 | A | 21-11-1995 | NONE | | |
| EP 1930149 | A | 11-06-2008 | NONE | | |
| DE 19640440 | A1 | 09-04-1998 | WO | 9814321 A1 | 09-04-1998 |
| | | | EP | 0929396 A1 | 21-07-1999 |
| | | | ES | 2148941 T3 | 16-10-2000 |
| | | | JP | 2000506784 T | 06-06-2000 |
| | | | JP | 3415163 B2 | 09-06-2003 |
| | | | US | 6193625 B1 | 27-02-2001 |
| EP 1126581 | A | 22-08-2001 | BR | 0100621 A | 09-10-2001 |
| | | | CN | 1314242 A | 26-09-2001 |
| | | | CZ | 20010586 A3 | 17-10-2001 |
| | | | DE | 10007505 A1 | 30-08-2001 |
| | | | JP | 2001252799 A | 18-09-2001 |
| | | | US | 2002077207 A1 | 20-06-2002 |
| JP 59070497 | A | 20-04-1984 | NONE | | |
| JP 11058091 | A | 02-03-1999 | NONE | | |
| JP 11033797 | A | 09-02-1999 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H61994190598 A
- JP H11199933797 A
- JP 2004344946 A